# EUROPEAN PATENT SPECIFICATION

(11) **EP 3 168 768 B1**
(45) Date of publication and mention of the grant of the patent: **29.07.2020**
(21) Application number: 16198679.9
(22) Date of filing: 14.11.2016
(51) Int. Cl.: G06F 21/12

(54) **SOFTWARE PROTECTION**
SOFTWARESCHUTZ
PROTECTION DE LOGICIELS

(30) Priority: 13.11.2015 GB 201520047; 21.06.2016 EP 16175527
(43) Date of publication of application: 17.05.2017
(73) Proprietor: Towers Watson Limited, Reigate, Surrey RH2 9PQ (GB)
(72) Inventor: BEARDALL, Mark, South Nutfield, Surrey RH1 4EF (GB); BRANDMAN, Melvin, Woodford Green, Essex IG8 8RW (GB)
(74) Representative: Barker Brettell LLP

(56) References cited:
- EP-A2- 1 351 111
- US-A1- 2005 102 664
- US-A1- 2008 021 936
- US-A1- 2009 119 779

## Description

### Technical Field

The present invention relates to systems and methods for controlling access to software, a computer program or system and/or to activating software, a computer program or system.

### Background to the Invention

Various measures are implemented to ensure only those persons entitled or authorized to access a document or a computer system can do so. For example, password protection for logging on to a computer, or accessing a particular account is extremely common these days. Data can also be protected with encryption. Here, data is encoded or encrypted such that it cannot be accessed or retrieved without the correct key. This is widely used to protect a user's rights, privacy and identity, and to stop others from gaining access to that user's data. Further measures are needed to prevent unauthorized copying of software.

Software piracy - illegally dealing with software without authorization - is rife these days. Software is often protected with a licence. For example, a single user may only be entitled to install the software on a single machine. Copying of that software is software piracy. Other forms of protection are also used, for example activation keys, dongles and other software or cloud based solutions. Using a networked license server to carry out regular checks to ensure that the user of a software program is authorised to be using the program is a strong method of restricting software piracy. However, one of the issues when enforcing regular licensing check over a network is that if the network connection is interrupted then the program cannot operate. This is a particular issue for critical software.

US2008/021936 A1 discloses a method for distinguishing a file from any or all copies of the file that may exist. The method ascertains the actual physical location of the file and associates that physical location with the file as the claimed physical location of the file. The file's originality status may then be determined by finding the location claim, reading from it the claimed physical location associated with the file, ascertaining the actual physical location of the file, and comparing the locations. If the claimed and actual locations are identical, then the file is the original file it claims to be. If there is disparity between the claimed physical location recited for or by the file and the actual physical location of the file, then it is not the original file it claims to be.

US 2005/102664 A1 discloses a method and system that allows the pre-installation of a software application without a license key. The computer system installs a software application and provides a prompt for a license key. The license key is stored in a registry. If the license key is not entered, the computer system installs the software application and installs disabling code. At startup, the disabling code is executed if installed, providing a prompt for a license key. If the proper license key is entered, the computer system stores the key in a registry and uninstalls the disabling code, allowing installation of the software application.

EP 1351111 A2 discloses a product update used to add a licensing control mechanism to an installed computer program. The computer program is preferably a malware scanner or other program which requires regular product updating in order to remain effective in its normal functionality. The licensing control mechanism has a grace period running from the installation of the licensing control mechanism to enter a valid licence key.

A more robust system that can tolerate intermittent network or other hardware failure and still remains equally hard to penetrate is desirable. The present invention has been devised with the foregoing in mind.

### Summary of the invention

According to a first aspect of the present invention there is provided a method of controlling access to software as defined in claim 1.

Preferred and/or optional features are set out in the dependent claims.

As such, the invention compares the location of software that has been installed on a storage device, e.g. a computer hard drive, with a predefined location e.g. the location where the software should be installed. If there is a match, i.e. the software is in the right place, access to the software can be granted to enable the software to run. Otherwise, access is denied. The invention makes use of the feature that when software is installed on a storage device, it is "randomly" assigned a location on the storage device in the sense that it is not known in advance where the software will be stored, but the location is chosen according to available storage capacity. When a user tries to run a piece of software, if he is authorised to do, the determined location will match the predefined location enabling the software to be run. If, however, the software has been copied without authorisation, it is extremely unlikely that the new location (and i.e. that which will be determined by the invention) will match the predefined location (i.e. the original or authorised location), in which case access is denied.

In an embodiment, the determined location and/or the predefined physical location is a location co-ordinate such as a sector and block.

The method may further comprise encrypting the determined location and storing the encrypted determined location. The predefined location may also be encrypted. The encryption of the determined location and/or the predefined location may use a set of cryptographic hash functions.

In an embodiment, the method further comprises recording an instance of the method being performed in a database.

The method may further comprise activating software installed on a storage device. Alternatively, instead of storing data confirming the software has been successfully activated in accordance with said one or more parameters, the method may provide for storing data confirming the software was not successfully activated in accordance with said one or more parameters.

The method may further comprise encrypting the location and storing the encrypted location. The encryption of the location may use a set of cryptographic hash functions.

The method comprises determining the presence of a valid licence. The method may further comprise determining if execution is occurring on a predefined network. In an embodiment an internet connection may be required.

The method may further comprise recording information relating to activation of said software including whether or not activation was successful and/or user details.

The software also includes an expiry date/period feature such that the software can only rely on the authentication process of the first aspect for a limited time before it is necessary for a user to connect to a license server to verify the license.

According to another aspect of the present invention there is provided a system for controlling access to software as defined in claim 11.

Alternatively, instead of storing data confirming the software has been successfully activated in accordance with said one or more parameters, the system may provide for storing data confirming the software was not successfully activated in accordance with said one or more parameters.

In any or all aspects and embodiments, the storage device may be any storage device that utilises a referencing system for recording where software is installed thereon. For example, the storage device may be a magnetic medium storage device such as a magnetic disk or solid state memory disk. It may be part of or otherwise in communication with a user machine or terminal, e.g. a personal computer (PC). The user machine may be in either wired or wireless communication with a server or data centre or suchlike. The server/data centre may be or comprise a database or other storage device and may store authorisation details that e.g. identify a user as being authorised to install and/or run a piece of software.

It may also store activity information relating to the software e.g. when it was installed, accessed or attempted to be accessed etc.

"Software" as used herein may refer to a software system, application or program. It may also refer to any other type of data that can be stored on an electronic storage device such as a magnetic medium or solid state storage medium.

Advantageously, aspects and embodiments of the invention can prevent unauthorised copying of or access to the program.

Aspects and embodiments of the invention provide for secure running of a program such as an executable and ensure it can only be run if it has gone through a proper activation or registration process. If the proper registration process has not been followed or completed, the software is prevented from running which may then limit or prevent access to other software, system, files etc.

The invention advantageously makes use of the feature that when a system or software is installed, this happens in a random or semi-random manner. I.e. on installation, software is stored in one or more locations (sectors and blocks) depending on existing storage constraints. A small installation may be installed in one location on the storage device, although this will be at a location not known in advance, where there is space to accommodate the installation. Larger installations will be split over a plurality of locations, again at "random" locations (i.e. not predetermined) depending upon available storage capacity. It is not possible to predict where a particular installation will be stored on a storage device (which could be physical or virtual). The invention utilises the fact that attempting to copy a piece of software will result in it being saved in one or more different locations, again which cannot be determined in advance. The chance of a copied version being in identical locations on the target storage media is extremely small. Aspects and embodiments of the invention can be used with any storage device that uses a location referencing system.

In aspects and embodiments of the invention, where software has been installed under authorisation, the location data of the software (or a part thereof) will match location data determined and stored during installation of that software. Only then will be software be able to be run. I.e. if any unauthorised installation or copying has occurred, the software will not be able to be run.

The computer program may be provided on a computer readable medium, which may be a physical computer readable medium, such as a disk or a memory device

### Brief description of the drawings

Embodiments of the invention will now be described with reference to the Figures of the accompanying drawings in which:
Figure 1 shows a representation of file storage on a hard disk drive;
Figure 2 is a block diagram of apparatus used for carrying out the method of aspects and embodiments of the invention;
Figure 3 is a flow chart of a method incorporating part of the invention;
Figure 4 is a flow chart of another method incorporating another part of the invention; and
Figure 5 is a flow chart of another method incorporating another part of the invention.

### Detailed description of embodiments of the invention

A software program comprises one or more components in the form of electronic files that are held on a storage device. Storage devices are available in a variety of different types, including magnetic storage devices, optical storage devices, flash drives, solid state drives as well as online and cloud based storage. Magnetic storage and solid state (SS) storage media are common in computer hard drives. Commonly used magnetic media (MM) can be in the form of magnetic discs which, in turn, can be attached to standalone PCs, Laptops, File Server Networks, SANs (Storage Area Networks), NASs (Network Attached Storage), etc.

Access to storage media, for example MM or SS media, is through an operating system, and the particular operating system (OS) will format the storage media in such a way that each file placed in storage can be located through a reference location which, in Microsoft™ (MS) terminology, for a hard disk is the cluster number where the file starts. This reference location can be considered as a coordinate system, in a similar way that we can navigate to places on the globe via latitude & longitude coordinates.

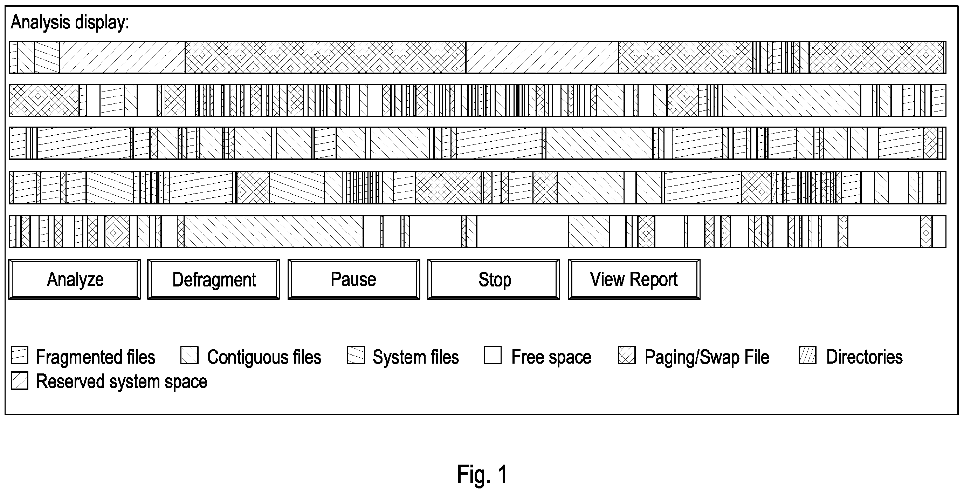

When a file is placed onto MM, the OS will decide where to place it depending on the availability of free space. For example, a 1MB file would need space on the disk at least 1MB in size but, placing this on the disk may leave small gaps in between. Furthermore, when changes are made to the storage, e.g. files are moved or deleted, this may result in gaps being formed. Figure 1 shows an example representation of fragmentation on a magnetic hard drive disk where the bands show the storage locations of various files, with the white spaces in between representing free space on the disk.

Unless one MM device has been cloned from another, the free space pattern of any two MMs will be vastly different from each other, as each will have a totally different history of how applications and data files have been loaded onto them. Given this situation, if a particular application/system were loaded onto two different MMs, then the likelihood that the component files will end up in the same location on the two MMs will be extremely low.

As such, if the system components are copied from one MM to another, then any one particular component copied will not end up in the same location on the destination MM as it was on the source MM.

Commercial software applications normally require a valid licence to be available in order to launch, with availability of the licence also required for the continued operation of the launched application. A licence may be concurrent or assigned. When licences are consumed over a network from a licence server the application becomes reliant not only on the stability of the licence server itself, but also on the reliability of the network.

Some software applications currently include a grace or expiry period for coping with network instability or short interruption to the licence server. The grace period allows the application to continue to run (remain in a 'licensed state') in the event that the licence becomes unavailable e.g. connection to the license server is lost. That grace period is reliant on the application having successfully launched and acquired a licence in the first place.

The grace period currently implemented by some applications suffers by being process-bound in that the application must successfully launch and obtain a valid licence before it is able to enter a grace period if the licence becomes inaccessible/invalid. If the application is unable to obtain a licence at startup then the application is not able to enter the grace period. Furthermore, if a user is currently running an instance of the application and communication to the licence server is lost then the running instance may enter the grace period but the unavailability of licences will prevent the user from launching additional instances of the application.

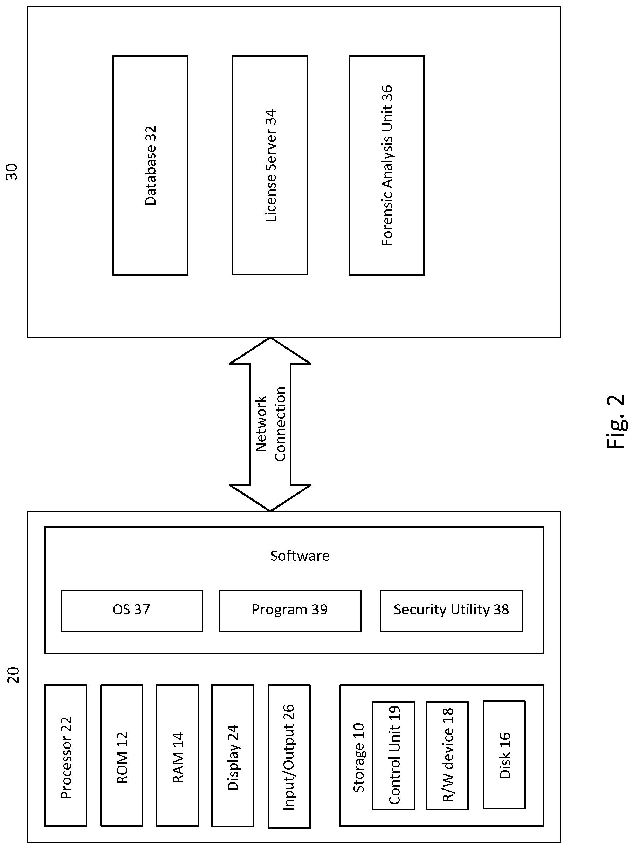

Figure 2 depicts a storage device 10 that is part of or otherwise in communication with a user machine or terminal 20, e.g. a personal computer (PC). The PC 20 is in wired or wireless communication with a server or data centre 30. For the purposes of the following discussion, and by way of example, the storage device 10 is a magnetic storage device (MM). It will however be appreciated that, and as will become clear later on, other types of storage device can be used with aspects and embodiments of the present invention including, but not limited to, solid state storage media. Aspects and embodiments of the present invention can be used with any kind of storage device that has or uses a referencing system for indicating the location of content stored therein or thereon.

A typical MM comprises a read only memory (ROM) 12 and a random access memory (RAM) 14. One or more magnetic disks 16 are written to/read from by a read/write device 18 under the control of a control circuit 19. (In other embodiments, where the storage device is not a MM, the storage device(s) may be one or more other disks etc. e.g. optical disks.)

The PC has a processor 22, a display 24 and one or more input/output devices/controls 26.

The remote server/data centre 30 comprises a database 32 for storing details of the software, authorized users and/or other information required for activation/registration of the software etc. A license server 34 governs the issuance, use and termination of licenses for using the software. A forensics/analysis unit 36 comprises algorithms for analysing data from the database e.g. to monitor when permissible and impermissible attempts to install and/or use the software have been attempted. A security utility manager or module 38 is responsible for regulating the rights to install software on a machine or network and/or to check whether or not attempted access to installed software is valid or authenticated. The security utility 38 is part of the software and communicates with the license server 34. Any one or more of these components may be stored in a physical or virtual location.

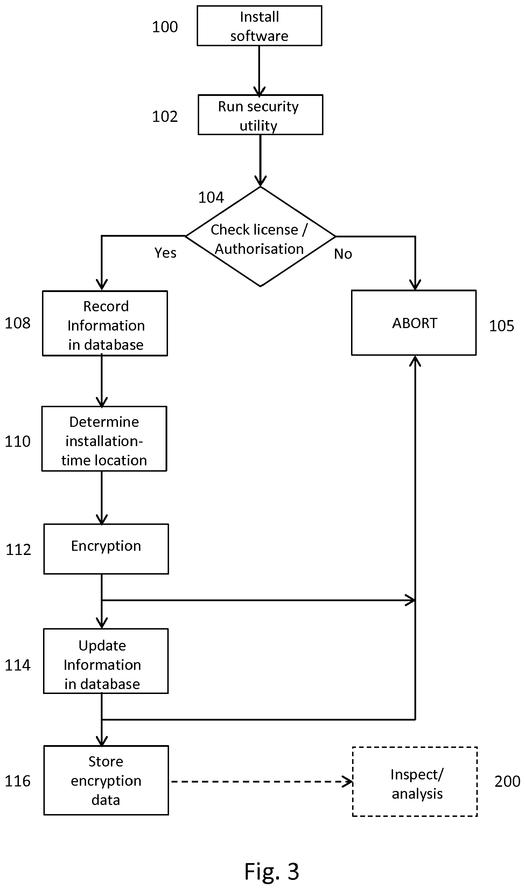

Figure 3 illustrates a method incorporating an embodiment of the present invention, for "activating" software. Initially, in step 100, a user initiates installation of some software on their machine or server 20 using an installation routine. The installation optionally forms part of an embodiment according to the invention, but may alternatively be a prerequisite thereto. In an embodiment, a user installs a piece of software and then runs the security utility 38. Alternatively, the security utility 38 could be part of the installation procedure.

In step 102, the security utility 38 is run to authenticate the user/entity making the request to install the software. This may comprise checking that the installation has occurred or is occurring on a valid and/or authenticated machine or network e.g. an internal company network and/or checking the user is entitled to install the software. Alternatively, this may comprise authenticating a user or request on another machine or network. A valid license number or a password may be requested.

For example, a user may be prompted to input a license number. In step 104, the security utility module 38 checks the license against data from the license server 34 and, if the license is registered and valid, grants access to proceed with the installation of the software (Y); otherwise access is denied and the installation process is aborted (N) at step 105. Of course, a user may inadvertently enter an incorrect password or license number, and so the security utility module 38 may permit multiple (e.g. any number between and including three and ten, or otherwise) attempts before aborting at step 105. The security utility module 38 may additionally, or alternatively, check whether the software is designed or intended to run in the data centre 30 and, if not, may abort at step 105. If the security utility cannot connect to the license server 34, the installation aborts at step 105.

In step 108, the security utility 38 writes information to the online registration database 32. Data that may be recorded may include one or more of the following: registration in process flag, date, time, IP address and license number (if applicable), although this list is not exhaustive.

In step 110, the utility 38 determines the physical location of the program/software being installed on the MM 10 (the installation-time physical location). Preferably this is in the form of location co-ordinates e.g. a sector and block reference. Where the installation requires storage capacity comprising a plurality of sectors and blocks, it is convenient and conventional for the location co-ordinates to represent the starting point of the storage used, but a different location and other criteria could in principle be used. Typically, a MM comprises a platter, each of which is divided into concentric rings or tracks. Each track is divided into sectors, which can accommodate a predetermined amount of data. The utility 38 then encrypts the determined location co-ordinates (step 112). In an embodiment, the determined installation-time physical location is encrypted using a one-way salted hash function. The encryption/hashing can occur at, during or after installation.

In an embodiment, encryption is via a one-way salted industry strength SHA-2 hash function. The encrypted location is stored in a configuration file or "fingerprint" file on the user's device. Using a one-way salted hash for encryption ensures that the hash string cannot be decrypted by a mathematical formula or cannot be looked up in a rainbow table. SHA-2 is a set of cryptographic hash functions (SHA-224, SHA-256, SHA-384, SHA-512, SHA-512/224, SHA-512/256) designed by the U.S. National Security Agency (NSA) and published in 2001 by the NIST as a U.S. Federal Information Processing Standard (FIPS). SHA stands for Secure Hash Algorithm. SHA-2 includes a significant number of changes from its predecessor, SHA-1. SHA-2 currently consists of a set of six hash functions with digests that are 224, 256, 384 or 512 bits. In cryptography, a salt is random data that is used as an additional input to a one-way function that hashes a password or passphrase. The primary function of salts is to defend against dictionary attacks and pre-computed rainbow table attacks. A rainbow table is a pre-computed table for reversing cryptographic hash functions, usually for cracking password hashes.

Importantly, the invention encrypts actual, physical location data rather than, for example, using the virtual location of software sitting in a folder e.g. a virtual file locator/bookmark. Advantageously, the data being encrypted is simple physical location data, although the output encrypted data itself may be physical or virtual.

A time stamp may also be stored in the encrypted configuration file. For example, the date and time of installation, may be encrypted and stored in the configuration file. The encrypted configuration file may also contain identifying information about the software application and the computer it is installed on.

In step 114, the registration database 32 is updated. Data that may be recorded include one or more of the following: registration complete flag, date, time, IP address and license number (if applicable), although this list is not exhaustive.

The utility module 38 then writes the encrypted location data (the hash string) to the storage medium (for example, MM or SS memory). This may be in the MS Windows Registry if MS Windows is the underlying operating system, or in a configuration file if the underlying operating system is Unix or MS Windows (step 116).

In embodiments, at any time during or after the security utility procedure, the forensic/analysis unit 36 may inspect the online registration database 32 for suspicious installation activity patterns and/or may inspect records of aborted procedures (step 200). Depending on the information recorded, further investigation of the circumstances may be conducted.

Importantly, information confirming that successful (i.e. authorised) activation/registration has occurred can be stored.

After installation, when the software is run, the security utility 38 initially checks the license against data from the license server 34 to authenticate the user again. The information within the configuration file is checked and updated. If the user is authenticated, the license server 34 will permit a license to be "checked out" for use by the software.

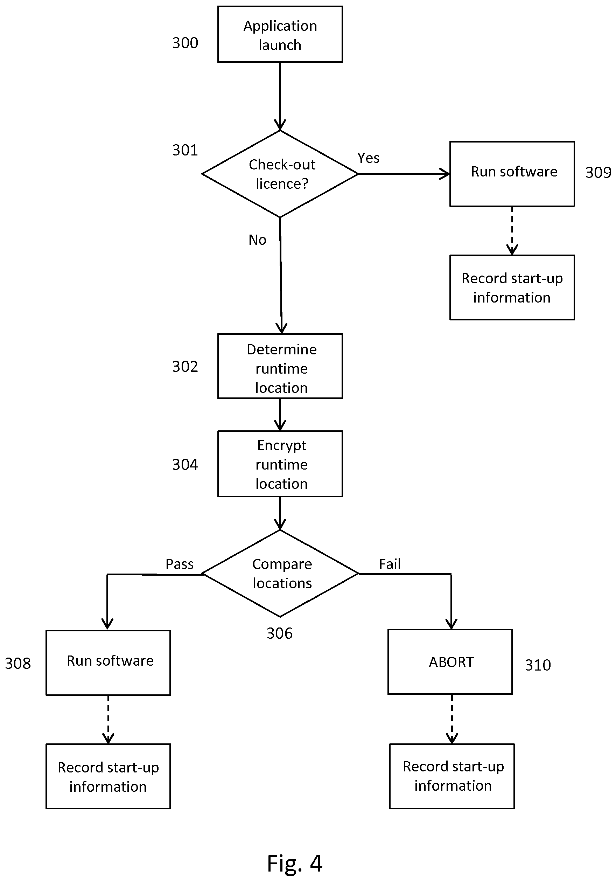

Figure 4 depicts checks that are made at or during software runtime according to an embodiment. In step 300, a user starts up a software program that has been installed on their machine/MM 10. At step 301, the software attempts to connect to the license server 34 to verify that the user is authorised to run the software and checkout a license. If the software can check-out a license, the application will run (step 309). If the software cannot connect to the license server 34, a license will not be checked out and the software proceeds to step 302. In step 302, the operating system determines the physical location coordinates of the software or a specified part of the software designated for comparison purpose (the runtime physical location). In step 304, the determined runtime physical location coordinates are encrypted using a hash function as previously described. In step 306, the software program compares the encrypted runtime physical location from step 304 against the stored encrypted predetermined installation-time physical location stored e.g. stored in a configuration file (from step 116). If the two hash strings match ("PASS"), the software program can continue to run (step 308). Otherwise, if the hash strings do not match ("FAIL"), the opening/running of the software program is aborted (step 310).

Information related to software start-up, or attempts at starting the software, can be recorded for real-time or future analysis.

If the system has been copied, bypassing the registration process, then the likelihood of the two hashed strings matching is very low for the reasons described above. Similarly, if unauthorised access is attempted, an unauthorised user will not have a valid, matching hash string (e.g. encrypted location data and/or username). In these events the software may not run or, if the checking procedures are part of the installation process, installation itself may be halted. In the event of an unauthorised access attempt, the software may be uninstalled and/or a message may be sent to the software authorising body to inform it of the unauthorised access attempt.

In some instances the utility that set up the configuration file with the hashed locations will need to be rerun e.g. if the software fails to run after a defragmentation of the MM (where file locations may change), a move of a file to another MM, or if a rebuild of the MM is required for any reason.

By way of an example, assume a software system comprises just three files:
- program.exe - the executable program
- program.prm - program file - holds non-changing parameter information
- program.cfg - configuration file - holds the encrypted hash for the location coordinates of the specified file

The specified file used for the location coordinates would need to be a read-only file, and could be either program.exe or program.prm, but assume it is program.prm for this example.

The security utility 38 when run, and if successful, will determine the location of program.prm (step 110), encrypt it (step 112), and then place the hash string into the program.cfg file (step 116), and/or it could be stored elsewhere.

Even if a rogue installer were to deduce what the specified file was, and in which file the hashed string was held, the strength of the hash encryption function would foil all attempts at copying the software, and bypassing the correct installation and activation process. If a protected program or software is copied without going through the "activation" process of Figure 2, then copying the program components to another computer disk, or using a hacked installation procedure is highly unlikely to work as the probability of being installed to exactly the same location on a different disk is extremely low.

In embodiments, the software includes an expiry date/period or grace period feature permitting off-line use of the software if within a specified grace period. While the software application is running and has a valid license (running in on-line mode), it may continually update the encrypted configuration file recording information about the application, the computer and the time stamp. The updated time stamp is then the current time/date.

In the event that the software application loses connection to the license server 34, the last recorded time stamp is read from the configuration file. If that time stamp plus the grace period results in a time that is later than the present time (i.e. in the future) the application will continue to operate as if it were licensed (running in off-line mode). If and when the grace/expiry period has expired, the software will not launch or will abort and the user is notified that the license is expired.

The configuration file is evaluated at startup thereby permitting the software to launch while there is no connection to the license server, as long as it is within the permitted grace period.

The grace period is therefore not process-bound or dependent on the software first connecting to the license server on startup. Since the configuration file is only created or updated when the software is operating in license mode (i.e. when connected to the license server 34) the application must have been licensed in order to qualify for operation in the grace period.

Since the software is permitted to run in the grace period without a concurrent license if there is a valid configuration file containing a feature reference within the grace period, the configuration file must be secure and unique, such that copying it to another computer will not enable launch of the software by an unauthorised user on an unauthorised computer. This is achieved using the above described encryption and determined physical location stored in the configuration file.

In addition to the determined physical location of the software and time stamp, data that may be stored in the encrypted configuration file includes, but is not limited to: computer host name; computer domain; computer MAC address(es); expiry date/time (current date/time plus grace period); username (including domain) of the computer account that is running the software; product and feature IDs of all the licenses that are currently checked out by the software; process ID if the running software; and a copy of the license key memory data.

By way of example once the data items have been retrieved they will be stored in the following way:
(1) The computer hostname, computer domain, computer MAC address(es), the location of the running application executable on the computer's logical volume, process ID, and optionally username, of the running application are combined into a data structure (XML) then converted into a byte array and hashed.
(2) The hashed value of the above data set (1), the version of the configuration file schema being used, the configuration file creation (current) date and time, the license product ID, the application executable file name, the username (including domain) of the user that is running the application that created the configuration file, the feature IDs of the licenses that have been checked out by the application and their respective checkout and grace period expiry date/times are combined into an XML data structure and encrypted.
(3) The above encrypted XML data structure (2) will be written to a file as a byte stream and saved to the user's profile application data directory.

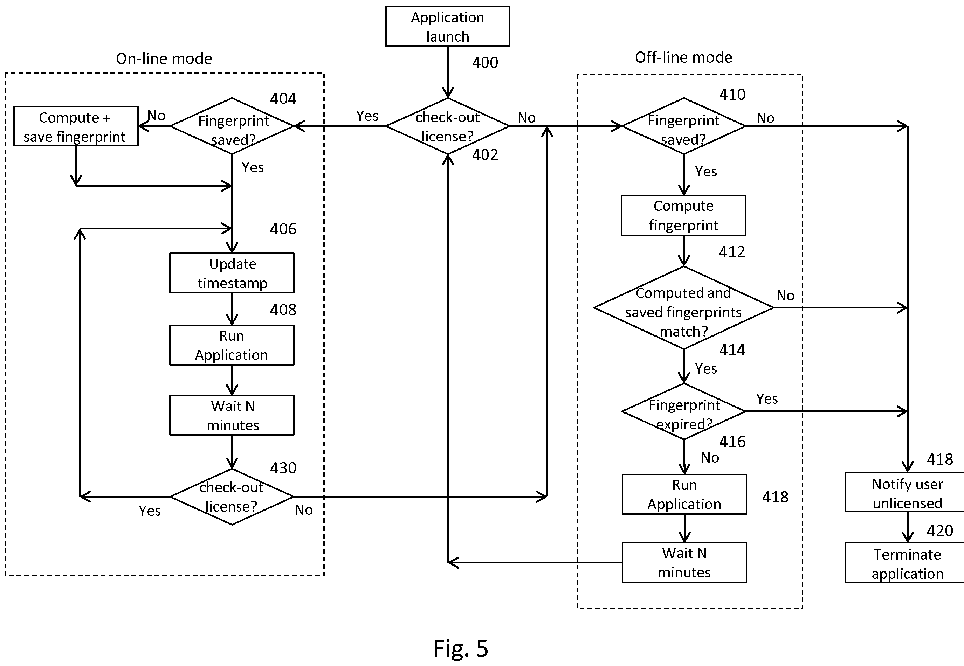

Figure 5 illustrates a method controlling access according to an embodiment. At step 400, a user starts up a software program that has been installed on their machine/MM 10. At step 402, the software checks if it can connect to the license server 34 to verify that the user is authorised to run the software and checkout a license. If the software cannot connect to the license server, a license will not be checked out and the software proceeds in off-line mode to step 410. If the software can connect to the license server 34 it proceeds in on-line mode to step 404.

### Off-line mode

In step 410, the software checks if a configuration file exists on the user's device. If no configuration file exists, the software was never licensed and the user is notified that the application is unlicensed at step 418. The software may then terminate at step 420. If a configuration file is found on the user's device, at step 412, the operating system determines the physical location coordinates of the software or a specified part of the software designated for comparison purpose. The determined location coordinates are encrypted using a hash function as previously described. At step 414, the software program compares the encrypted location from step 412 against the stored encrypted location e.g. stored in a configuration file. If the two hash strings match, the software program then checks, at 416, whether the grace period has expired. If the hash strings do not match at 414, or the grace period has expired at 416, the user is notified that the software is unlicensed at 418. The software may then terminate at step 420. If the grace period has not expired at 416, the software is licensed and will run at step 418. After a predetermined period of time (N minutes) has elapsed, the software will check again at 402 if it can connect to the license server 34 to verify the license. If no connection to the license server 34 is made at 402, the software loops back to step 410. The sequence of steps 410, 412, 414, 416, 418, 402 is repeated until either the grace period expires, or the connection to the license server 34 is established.

If the connection to the server is established, at 402, the user is authenticated and the license is checked-out. At step 406, the software checks the encrypted configuration file data and, where necessary it is updated, including the present time stamp. At step 408. the software proceeds to run in on-line mode.

### On line mode

At step 402, if the software can connect to the license server 34 and check out the license, at step 404 the application checks if a configuration file exists on the user's device. If configuration file does not exist, it will be created. If a configuration file is found at 404, the encrypted configuration file data is checked and, where necessary updated, including the present time stamp at 406. The software then proceeds to run in on-line mode at 408. After a predetermined period of time (N minutes) has elapsed, the software will check at 430 if it can connect to the license server 34 to verify the license. If the connection to the server 34 is still present, the user is authenticated and the license remains checked-out. The software then loops back to step 406, checks the encrypted configuration file data and, where necessary updates it, including the present time stamp. At step 408, the software continues to run in on-line mode. The sequence of steps 406, 408, 430 is repeated until the software is terminated by the user or the connection to the license server 34 is lost. If the connection to the license server 34 is lost, at step 430 the software will drop out of the on-line mode and proceed in off-line mode to step 410.

Aside from creating/updating the encrypted configuration file about the machine and the time stamp, the identity of the feature that was checked out will also be stored in the form of a product ID and feature ID pair with a grace period expiry date and time. This enables the application to know which product feature licenses it has successfully checked out and when the respective grace periods will expire.

For the sake of completeness it is also stated that the term "comprising" does not exclude other elements or steps, the term "a" or "an" does not exclude a plurality, and reference signs in the claims shall not be construed as limiting the scope of the claims.

## Claims

1. A method of controlling access to software installed on a storage device or during installation of said software, the method comprising:
(i) upon installation of software:
checking (104) a licence number against data from a licence server (34) to determine if a user is entitled to install the software on the storage device;
determining (110) the physical location of said software, or a part thereof, on said storage device, said location being the installation-time physical location;
storing (116) the determined installation-time physical location in a configuration file stored on the storage device (10), including storing one or more parameters including a time and date of the installation and an expiry period for allowing or denying unlicensed access to the software; and
storing (114) data confirming the software has been successfully activated in accordance with said one or more parameters;
and (ii) upon launching or during runtime of the installed software:
checking (301; 402, 430) if the software can connect to the licence server (34); and
(a) if the software can connect to the licence server:
checking (404) one or more parameters in the configuration file stored on the storage device against data from the licence server to determine if a user is entitled to check-out a licence from the licence server to run the software;
if the user is determined to be entitled to check-out a licence, check-out a licence, run or continue to run (309; 408) the software and update (406) the one or more parameters, wherein the one or more parameters further include the check-out time and date; or
(b) if the software cannot connect to the licence server:
determining (302; 412) the physical location of software, or a part thereof, on a storage device, said location being the runtime physical location;
comparing (306; 414) the determined runtime physical location of the software with the predetermined installation-time physical location stored in the configuration file;
checking (416) if the present time is within the expiry period; and
denying access to or preventing execution (310; 420) of the software where the determined runtime location and the predetermined installation-time physical location do not match or if the present time is not within the expiry period.

2. The method of claim 1, wherein the determined runtime location and/or the predetermined installation-time physical location is a location co-ordinate such as a sector and block.

3. The method of claim 1 or 2, further comprising encrypting the determined runtime location and storing the encrypted runtime location, and encrypting the determined installation-time location and storing the encrypted installation-time location.

4. The method of claim 3, wherein the encryption of the determined runtime location and/or the determined installation-time location uses a set of cryptographic hash functions.

5. The method of any preceding claim, further comprising recording an instance of the method being performed in a database.

6. The method of any preceding claim, wherein the step of checking (301; 402, 430) if the software can connect to a licence server occurs periodically during runtime.

7. The method of any preceding claim, wherein the step of determining (412) the physical location of software, or a part thereof, on a storage device further comprises checking (410) if a configuration file is stored on the storage device.

8. The method of any preceding claim, wherein the expiry period runs from the last recorded check-out time.

9. The method of any preceding claim, further comprising recording information relating to activation of said software including whether or not activation was successful and/or user details.

10. The method of any preceding claim, wherein the storage device is a magnetic medium storage device such as a magnetic disk; or solid state memory.

11. A system for controlling access to software installed on a storage device, the system comprising:
an access control module (38) configured to perform the method steps of any of claims 1 to 10.

12. The system of claim 11, wherein the storage device is a magnetic medium storage device such as a magnetic disk; or solid state memory.

## Patentansprüche

1. Verfahren zum Steuern des Zugriffs auf Software, die auf einer Speichervorrichtung installiert ist, oder während der Installation der Software, wobei das Verfahren umfasst:
(i) bei der Installation von Software:
Prüfen (104) einer Lizenznummer gegen Daten von einem Lizenzserver (34), um zu bestimmen, ob ein Benutzer berechtigt ist, die Software auf der Speichervorrichtung zu installieren;
Bestimmen (110) des physikalischen Orts der Software oder eines Teils davon auf der Speichervorrichtung, wobei der Ort der physikalische Installationszeitort ist;
Speichern (116) des bestimmten physikalischen Installationszeitorts in einer auf der Speichervorrichtung (10) gespeicherten Konfigurationsdatei, einschließlich des Speicherns eines oder mehrerer Parameter, einschließlich einer Zeit und eines Datums der Installation und eines Ablaufzeitraums zum Zulassen oder Verweigern eines unlizenzierten Zugriffs auf die Software; und
Speichern (114) von Daten, die bestätigen, dass die Software erfolgreich in Übereinstimmung mit dem einen oder den mehreren Parametern aktiviert wurde;
und (ii) beim Start oder während der Laufzeit der installierten Software:
Prüfen (301; 402, 430), ob die Software eine Verbindung zu dem Lizenzserver (34) herstellen kann; und
(a) wenn die Software eine Verbindung zu dem Lizenzserver herstellen kann:
Prüfen (404) eines oder mehrerer Parameter in der auf der Speichervorrichtung gespeicherten Konfigurationsdatei gegen Daten von dem Lizenzserver, um zu bestimmen, ob ein Benutzer berechtigt ist, eine Lizenz vom Lizenzserver zum Ausführen der Software auszuchecken;
wenn bestimmt wird, dass der Benutzer berechtigt ist, eine Lizenz auszuchecken, Auschecken einer Lizenz, Ausführen oder weiter Ausführen (309; 408) der Software und Aktualisieren (406) des einen oder der mehreren Parameter, wobei der eine oder die mehreren Parameter weiter die Auscheckzeit und -Datum aufweisen; oder
(b) wenn die Software keine Verbindung zu dem Lizenzserver herstellen kann:
Bestimmen (302; 412) des physikalischen Orts der Software oder eines Teils davon auf der Speichervorrichtung, wobei der Ort der physikalische Laufzeitort ist;
Vergleichen (306; 414) des bestimmten physikalischen Laufzeitorts der Software mit dem vorbestimmten physikalische Installationszeitort, der in der Konfigurationsdatei gespeichert ist;
Prüfen (416), ob die aktuelle Zeit innerhalb des Ablaufzeitraums liegt; und
Verweigern des Zugriffs oder Verhindern der Ausführung (310; 420) der Software, wenn der bestimmte Laufzeitort und der vorbestimmte physikalische Installationszeitort nicht übereinstimmen oder wenn die aktuelle Zeit nicht innerhalb des Ablaufzeitraums liegt.

2. Verfahren nach Anspruch 1, wobei der bestimmte Laufzeitort und/oder der vorbestimmte physikalische Installationszeitort eine Ortskoordinate, wie etwa ein Sektor und ein Block, ist.

3. Verfahren nach Anspruch 1 oder 2, weiter umfassend das Verschlüsseln des bestimmten Laufzeitorts und das Speichern des verschlüsselten Laufzeitorts, und das Verschlüsseln des bestimmten Installationszeitorts und das Speichen des verschlüsselten Installationszeitorts.

4. Verfahren nach Anspruch 3, wobei die Verschlüsselung des bestimmten Laufzeitorts und/oder des bestimmten Installationszeitorts eine Reihe von kryptographischen Hash-Funktionen verwendet.

5. Verfahren nach einem vorstehenden Anspruch, weiter umfassend das Aufzeichnen einer Instanz des in einer Datenbank durchgeführten Verfahrens.

6. Verfahren nach einem vorstehenden Anspruch, wobei der Schritt des Prüfens (301; 402, 430), ob die Software eine Verbindung zu einem Lizenzserver herstellen kann, periodisch während der Laufzeit erfolgt.

7. Verfahren nach einem vorstehenden Anspruch, wobei der Schritt des Bestimmens (412) des physikalischen Orts der Software oder eines Teils davon auf einer Speichervorrichtung weiter das Prüfen (410), ob eine Konfigurationsdatei auf der Speichervorrichtung gespeichert ist, umfasst.

8. Verfahren nach einem vorstehenden Anspruch, wobei der Ablaufzeitraum mit der zuletzt aufgezeichneten Auscheckzeit beginnt.

9. Verfahren nach einem vorstehenden Anspruch, weiter umfassend das Aufzeichnen von Information über die Aktivierung der Software, die Benutzerdetails und/oder ob die Aktivierung erfolgreich war oder nicht aufweist.

10. Verfahren nach einem vorstehenden Anspruch, wobei die Speichervorrichtung eine Magnetmedium-Speichervorrichtung, wie etwa ein Magnetplattenspeicher; oder ein Festkörperspeicher ist.

11. System zum Steuern des Zugriffs auf Software, die auf einer Speichervorrichtung installiert ist, wobei das System umfasst:
ein Zugriffssteuerungsmodul (38), das konfiguriert ist, um die Verfahrensschritte nach einem der Ansprüche 1 bis 10 durchzuführen.

12. System nach Anspruch 11, wobei die Speichervorrichtung eine Magnetmedium-Speichervorrichtung, wie etwa ein Magnetplattenspeicher; oder ein Festkörper-speicher ist.

## Revendications

1. Procédé de commande d'accès à un logiciel installé sur un dispositif de stockage ou durant une installation dudit logiciel, le procédé comprenant :
(i) lors d'une installation de logiciel :
la vérification (104) d'un numéro de licence par rapport à des données provenant d'un serveur de licence (34) pour déterminer si un utilisateur est en droit d'installer le logiciel sur le dispositif de stockage ;
la détermination (110) de l'emplacement physique dudit logiciel, ou d'une partie de celui-ci, sur ledit dispositif de stockage, ledit emplacement étant l'emplacement physique au moment d'installation ;
le stockage (116) de l'emplacement physique au moment d'installation déterminé dans un fichier de configuration stocké sur le dispositif de stockage (10), incluant le stockage d'un ou plusieurs paramètres incluant une heure et une date de l'installation et une période d'expiration pour permettre ou refuser un accès sans licence au logiciel ; et
le stockage (114) de données confirmant que le logiciel a été activé avec succès conformément auxdits un ou plusieurs paramètres ;
et (ii) lors du lancement ou durant l'exécution du logiciel installé :
la vérification (301 ; 402, 430) si le logiciel peut se connecter au serveur de licence (34) ; et
(a) si le logiciel peut se connecter au serveur de licence :
la vérification (404) d'un ou plusieurs paramètres dans le fichier de configuration stocké sur le dispositif de stockage par rapport à des données provenant du serveur de licence pour déterminer si un utilisateur est en droit de retirer une licence à partir du serveur de licence pour exécuter le logiciel ;
si l'utilisateur est déterminé comme étant en droit de retirer une licence, le retrait d'une licence, l'exécution ou la poursuite de l'exécution (309 ; 408) du logiciel et la mise à jour (406) des un ou plusieurs paramètres, dans lequel les un ou plusieurs paramètres incluent en outre l'heure et la date de retrait ; ou
(b) si le logiciel ne peut pas se connecter au serveur de licence :
la détermination (302; 412) de l'emplacement physique d'un logiciel, ou d'une partie de celui-ci, sur un dispositif de stockage, ledit emplacement étant l'emplacement physique d'exécution ;
la comparaison (306 ; 414) de l'emplacement physique d'exécution déterminé du logiciel avec l'emplacement physique au moment d'installation prédéterminé stocké dans le fichier de configuration ;
la vérification (416) si le moment présent est dans la période d'expiration ; et
le refus d'un accès ou l'empêchement d'une exécution (310; 420) du logiciel lorsque l'emplacement d'exécution déterminé et l'emplacement physique au moment d'installation prédéterminé ne correspondent pas ou si le moment présent n'est pas dans la période d'expiration.

2. Procédé selon la revendication 1, dans lequel l'emplacement d'exécution déterminé et/ou l'emplacement physique au moment d'installation prédéterminé est une coordonnée d'emplacement telle qu'un secteur et un bloc.

3. Procédé selon la revendication 1 ou 2, comprenant en outre le chiffrement de l'emplacement d'exécution déterminé et le stockage de l'emplacement d'exécution chiffré et le chiffrement de l'emplacement au moment d'installation déterminé et le stockage de l'emplacement au moment d'installation chiffré.

4. Procédé selon la revendication 3, dans lequel le chiffrement de l'emplacement d'exécution déterminé et/ou de l'emplacement au moment d'installation déterminé utilise un ensemble de fonctions de hachage cryptographique.

5. Procédé selon l'une quelconque des revendications précédentes, comprenant en outre l'enregistrement d'une instance du procédé réalisé dans une base de données.

6. Procédé selon l'une quelconque des revendications précédentes, dans lequel l'étape de vérification (301 ; 402, 430) si le logiciel peut se connecter à un serveur de licence se produit périodiquement durant une exécution.

7. Procédé selon l'une quelconque des revendications précédentes, dans lequel l'étape de détermination (412) de l'emplacement physique d'un logiciel, ou d'une partie de celui-ci, sur un dispositif de stockage comprend en outre la vérification (410) si un fichier de configuration est stocké sur le dispositif de stockage.

8. Procédé selon l'une quelconque des revendications précédentes, dans lequel la période d'expiration s'écoule à partir du dernier moment de retrait enregistré.

9. Procédé selon l'une quelconque des revendications précédentes, comprenant en outre l'enregistrement d'informations concernant une activation dudit logiciel incluant si une activation a ou non été réussie et/ou des détails sur l'utilisateur.

10. Procédé selon l'une quelconque des revendications précédentes, dans lequel le dispositif de stockage est un dispositif de stockage à support magnétique tel qu'un disque magnétique ; ou une mémoire à semi-conducteurs.

11. Système de commande d'accès à un logiciel installé sur un dispositif de stockage, le système comprenant :
un module de commande d'accès (38) configuré pour réaliser les étapes de procédé selon l'une quelconque des revendications 1 à 10.

12. Système selon la revendication 11, dans lequel le dispositif de stockage est un dispositif de stockage à support magnétique tel qu'un disque magnétique; ou une mémoire à semi-conducteurs.
